# EUROPEAN PATENT SPECIFICATION

(11) **EP 4 244 494 B1**
(45) Date of publication and mention of the grant of the patent: **08.07.2026**
(21) Application number: 21892549.3
(22) Date of filing: 20.10.2021
(51) Int. Cl.: F16B 45/02

(54) **SYSTEMS AND METHODS FOR A KEY OPTIMIZED DOUBLE GATED CARABINER**
SYSTEME UND VERFAHREN FÜR EINEN SCHLÜSSELOPTIMIERTEN KARABINER MIT DOPPELGATE
SYSTÈMES ET PROCÉDÉS POUR MOUSQUETON À DOUBLE DOIGT OPTIMISÉ PAR CLAVETTE

(30) Priority: 13.11.2020 US 202017097335
(43) Date of publication of application: 20.09.2023
(73) Proprietor: Nite Ize, Inc., Boulder, Colorado 80301 (US)
(72) Inventor: ADELMAN, Gregory M., Boulder, Colorado 80304 (US)
(74) Representative: Stöckeler, Ferdinand
(86) International application number: PCT/US2021/055812
(87) International publication number: WO 2022/103560

(56) References cited:
- DE-U1- 8 135 205
- US-A1- 2003 097 737
- US-S- D 785 316

## Description

### BACKGROUND

In various scenarios, connectors are useful for hikers, fishermen, outdoorsmen, travelers, and a variety of other users. Carabiners may be used to tie objects down, connect one object to another, and find a very wide variety of uses. In many scenarios, users utilize such carabineers for holding keys or other items. In many scenarios, the security of the keys or other objects on the device is at issue as is the usability of the device. A carabiner is known from US 2003/097737 A1.

### SUMMARY

A carabiner acccording to claim 1, and a method of using a carabiner according to claim 7 is provided. In embodiment, a carabiner apparatus includes a carabiner body, the carabiner body having a first portion and a second portion, the first and second portion defined by a G-arm, the first portion including a carabiner opening, the G-arm adjacent to the carabiner opening. The carabiner apparatus further includes a first gate, the first gate oriented to close and open the carabiner opening. The carabiner apparatus further includes a second gate, the second gate extending from the G-arm to a portion of the carabiner body, the second gate when closed separating the first portion of the carabiner body from the second portion of the carabiner body. In one alternative, the first gate opens inward on the carabiner body in a first rotational direction. Alternatively, the second gate opens in the first rotation direction and closes in a direction opposite the first rotational direction. In another alternative, the carabiner body includes a stop that prevents the second gate from rotating past a point in the direction opposite the first rotational direction. Alternatively, the carabiner body includes a cutout that allows the second gate to rotate in the first rotational direction. In another alternative, the stop and the cutout form a divot in the carabiner body. Alternatively, the carabiner body is shaped such that a first ring is slidable on the carabiner body from the carabiner opening through the first portion, past the divot, to the second portion. In another alternative, the second ring sliding past the divot pushes the second gate in the first rotational direction. Alternatively, a second ring in the second portion of the carabiner body, when slid towards the carabiner opening, pushes against the second gate in a second rotational direction opposite the first rotational direction. In another alternative, the stop prevents the second gate from rotating in the second rotational direction. Alternatively, the carabiner body is approximately oval-shaped and the G-arm extends from one side of the carabiner body towards an opposite side of the carabiner body. In another alternative, the carabiner body including the G-arm has a G-shape.

In one embodiment, a carabiner includes a carabiner body, the carabiner body having a first portion and a second portion, the first portion including a carabiner opening. The carabiner further includes a first gate, the first gate oriented to close and open the carabiner opening. The carabiner further includes a second gate, the second gate, when closed, separating the first portion of the carabiner body from the second portion of the carabiner body. In one alternative, the second gate is mounted proximate to the carabiner opening in relation to the carabiner body. In another alternative, the carabiner body includes an inwardly extending portion, the second gate mounted on the inwardly extending portion. Alternatively, the carabiner body includes a mounting area for the second gate. In another alternative, the mounting area is a G-Arm. Alternatively, the mounting area is an area of additional body material to accommodate mounting of the second gate.

In one embodiment, a method of using a carabiner includes providing a carabiner. The carabiner apparatus includes a carabiner body, the carabiner body having a first portion and a second portion, the first and second portion defined by a G-arm, the first portion including a carabiner opening, the G-arm adjacent to the carabiner opening. The carabiner further includes a first gate, the first gate oriented to close and open the carabiner opening. The carabiner further includes a second gate, the second gate extending from the G-arm to a portion of the carabiner body, the second gate when closed separating the first portion of the carabiner body from the second portion of the carabiner body. The method further includes sliding a key onto the carabiner body while using the key to open the first gate into the first portion. The method further includes sliding the key around the carabiner body. The method further includes using the key to open the second gate. The method further includes sliding the key into the second portion. In one alternative, the method further includes manually opening the second gate and sliding the key into the first portion.

### BRIEF DESCRIPTION OF THE DRAWINGS

Fig. 1 shows one embodiment of a G-Biner;
Figs. 2 and 3 shows the left and right side views of the G-Biner of Fig. 1;
Fig. 4 shows a front view of the G-Biner of Fig. 1;
Fig. 5 shows a rear view of the G-Biner of Fig. 1;
Figs. 6 and 7 shows the bottom and top views of the G-Biner of Fig. 1;
Fig. 8 shows the G-Biner of Fig. 1 with the gates removed;
Fig. 9 shows one embodiment of a G-Biner;
Fig. 10 shows a front view of the G-Biner of Fig. 9;
Fig. 11 shows a rear view of the G-Biner of Fig. 9;
Figs. 12 and 13 shows the left and right side views of the G-Biner of Fig. 9;
Figs. 14 and 15 show bottom and top views of the G-Biner of Fig. 9;
Fig. 16 shows the G-Biner of Fig. 9 with the gates removed;
Figs. 17 - 24 show one embodiment of a G-Biner; and
Figs. 25-32 show another embodiment of a G-Biner.

### DETAILED DESCRIPTION

Certain terminology is used herein for convenience only and is not to be taken as a limitation on the embodiments of a key optimized double gated carabiner ("G-Biner"). The carabiner is referred to as a G-Biner herein, however the device is not limited to a device having a G shape. In many embodiments, G-Biners include two gates and a biner (carabiner) frame. The two gates are oriented such that the hole of a key, a ring, object with an aperture, or other object having a ring-like shape (although the shape need not be circular) (collectively rings). Alternatively, this may include a rope/cord/etc. having an aperture or really anything having an aperture. For instance, embodiments of the G-Biner may be used with or incorporated into the loops of cords and ropes and be used to tie down objects like tents strings, tarps etc. Any device may benefit from the G-Biner or a device may open the gates when slid onto the carabiner frame and resists opening when the rings are slid the other way.

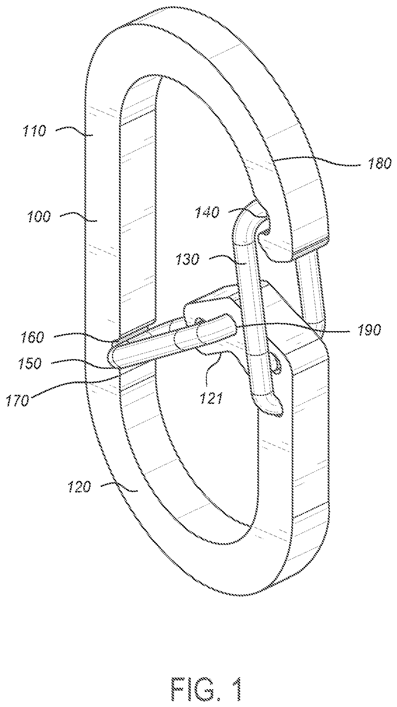

Fig. 1 shows one embodiment of a G-Biner 100. G-Biner 100 is formed to have a carabiner body. Typically, is body is formed of metal, composite, plastic, or other material. G-Biner 100 includes a top carabiner area 110 and a bottom carabiner area 120. G-Biner 100 includes a first gate 130. First gate 130 interfaces with the top carabiner area 110 at rest 140. G-Biner 100 includes a second gate 150. Second gate 150 rests against stop 160. The opposite side of stop 160 includes a cutout 170, which allows the second gate to flex downwards. G-Biner 100 also includes g-arm 121. In some embodiments, g-arm 121 may be removed and the second gate 150 may merely attach to the carabiner body below the attachment point of the first gate. In this case there may effectively be no g-arm. In alternatives, g-arm 121 may be increased in length or size. In some alternatives, the thickness of the carabiner body may accommodate keys and the apertures they contain. In other alternatives, the carabiner body may be made thicker as to not accommodate keys. Various variations in size and other all shape may be used.

In operation, a ring or a key with an aperture may push gate 130 inward. Then the ring or key with aperture may slide over and around body hook portion 180. The ring or key with aperture may then slide to gate 150. The continuous slide of the ring or key with aperture will then push down second gate 150 and slide into the bottom carabiner area 120. Once the ring or key with aperture is located in the bottom carabiner area 120, the ring or key with aperture may not backslide past second gate 150 without a user pushing the second gate 150 downwards before sliding the ring or key with aperture. In this way, keys or other objects may be quickly trapped and placed beyond second gate 150 in bottom carabiner area 120 in a relatively secure configuration. Thereafter, the top carabiner area may be clipped via the first gate to a belt loop or other object. In this way rings or keys with apertures may be loaded quickly to the G-Biner 100, without fear that the keys will be unintentionally released from the bottom carabiner area 120. And in a general way the rings or keys would have to pass by 2 gates, instead of the one gate in a typical carabiner to escape or be lost.

In the embodiment shown, G-Biner 100 includes an approximately oval shape with G-Arm 190 tilting inwards. G-Arm 190 provides an area for second gate 150 to be internally mounted. In alternatives, the G-Biner need not be G-shaped. The main principles of many embodiments include the inclusion of two gates that open in the same slide direction and resist opening in the opposite slide direction of a ring or key on the G-Biner. Further, many embodiments include two carabiner attachment areas, and outer (or top) area and an inner (or bottom) area.

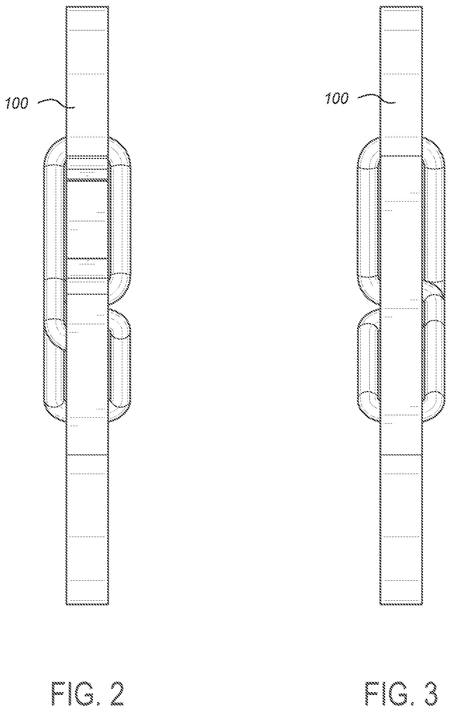

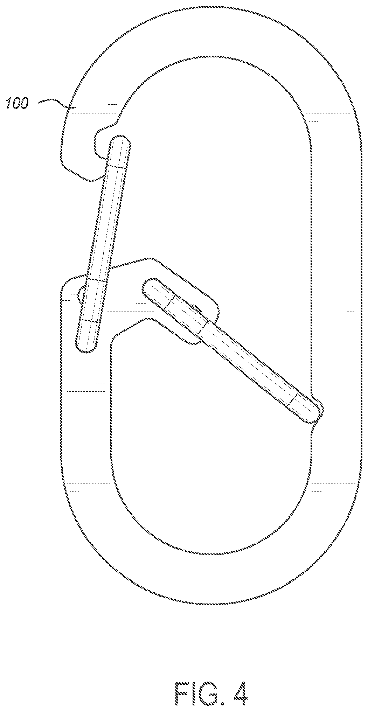

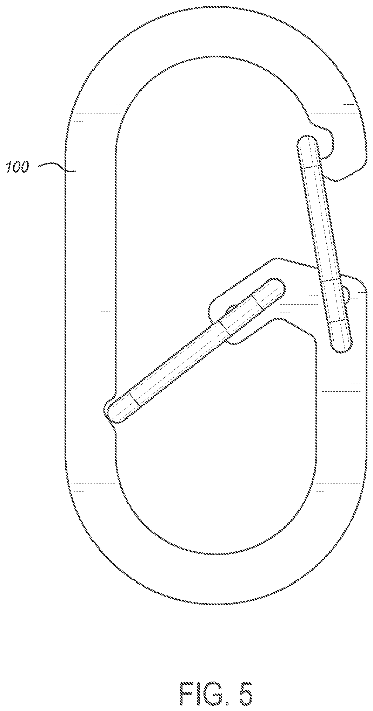

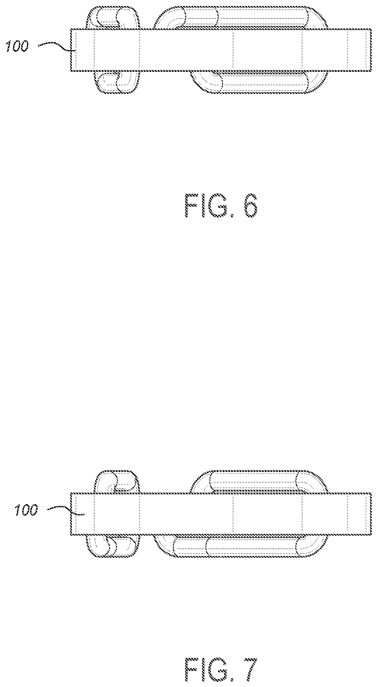

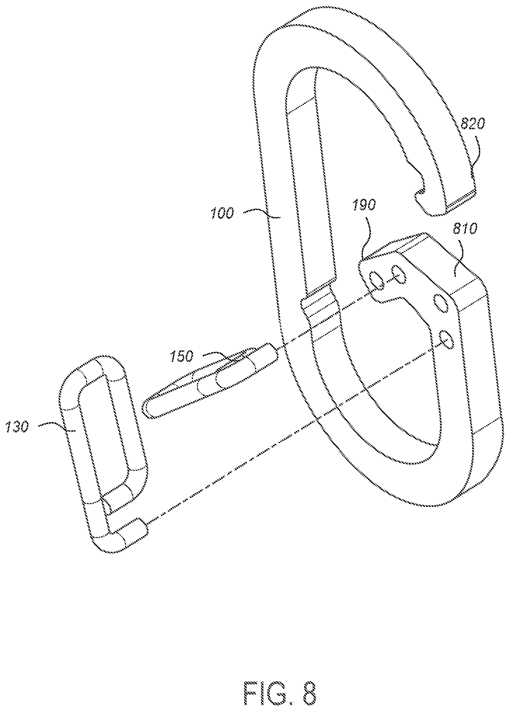

Figs. 2 and 3 show the left and right side views of G-Biner 100. Fig. 4, shows a front view of G-Biner 100. Fig. 5 shows a rear view of G-Biner 100. Figs. 6 and 7 show bottom and top views of G-Biner 100. Fig. 8 shows G-Biner 100 with gates 130, 150 removed. In this view, G-Arm 190 is clearly visible and the mounting holes for gate 150 are shown. G-Arm 190 provides for an attachment area, without interfering with the operation of gate 130. If the cross portion 810 of G-Arm 190 is inclined too far towards hook area 820, then gate 130 may not function normally (or at least enough for the gate to sufficiently open).

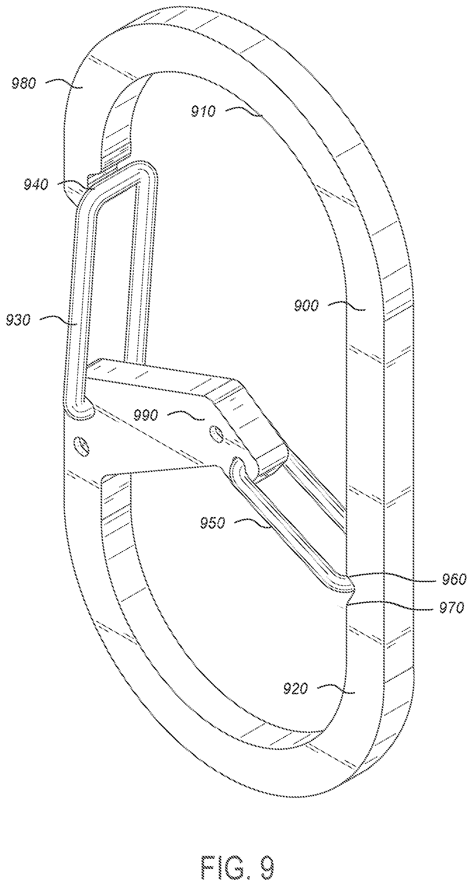

Fig. 9 shows another embodiment of a G-Biner 900. G-Biner 900 is a greater size than G-Biner 100 typically. Therefore, the G-Arm 990 may be longer. G-Biner 900 is formed to have a carabiner body. Typically, is body is formed of metal, composite, plastic, or other material. G-Biner 900 includes a top carabiner area 110 and a bottom carabiner area 920. G-Biner 900 includes a first gate 930. First gate 930 interfaces with the top carabiner area 910 at rest 940. G-Biner 900 includes a second gate 950. Second gate 950 rests against stop 960. The opposite side of stop 960 includes a cutout 970, which allows the second gate to flex downwards.

In operation, a ring or a key with an aperture may push gate 930 inward. Then the ring or key with aperture may slide over and around body hook portion 980. The ring or key with aperture may then slide to gate 950. The continuous slide of the ring or key with aperture will then push down second gate 950 and slide into the bottom carabiner area 920. Once the ring or key with aperture is located in the bottom carabiner area 920, the ring or key with aperture may not backslide past second gate 950 without a user pushing the second gate 950 downwards before sliding the ring or key with aperture. In this way, keys or other objects may be quickly trapped and placed beyond second gate 950 in bottom carabiner area 920 in a relatively secure configuration. Thereafter, the top carabiner area may be clipped via the first gate to a belt loop or other object. In this way rings or keys with apertures may be loaded quickly to the G-Biner 900, without fear that the keys will be unintentionally released from the bottom carabiner area 920.

In the embodiment shown, G-Biner 900 includes an approximately oval shape with G-Arm 990 tilting inwards. G-Arm 990 provides an area for second gate 950 to be internally mounted. In alternatives, the G-Biner need not be G-shaped. The main principles of many embodiments include the inclusion of two gates the open in the same slide direction and resist opening in the opposite slide direction of a ring or key on the G-Biner. Further, many embodiments include two carabiner attachment areas, and outer (or top) area and an inner (or bottom) area.

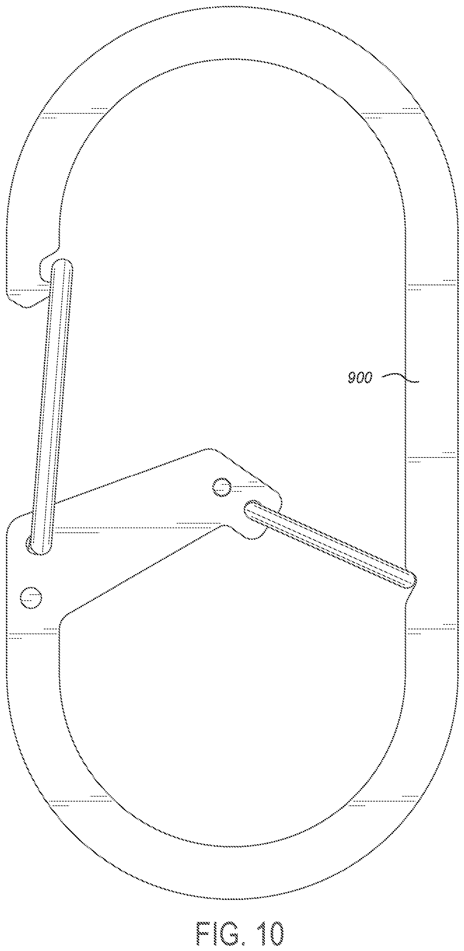

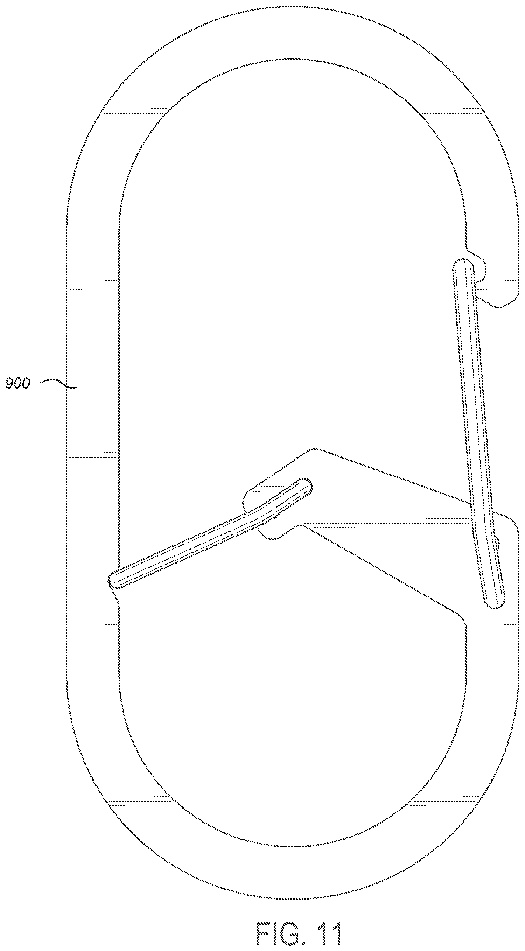

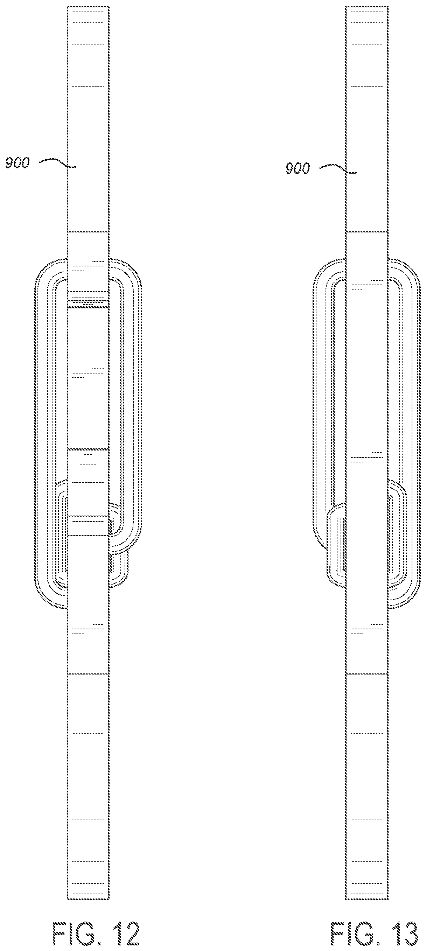

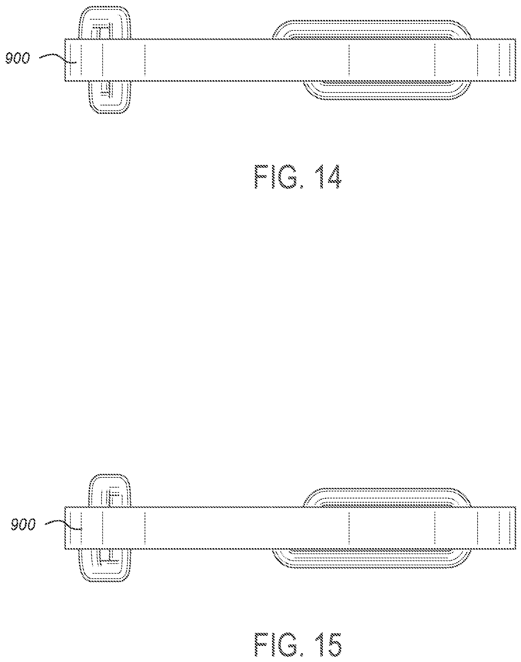

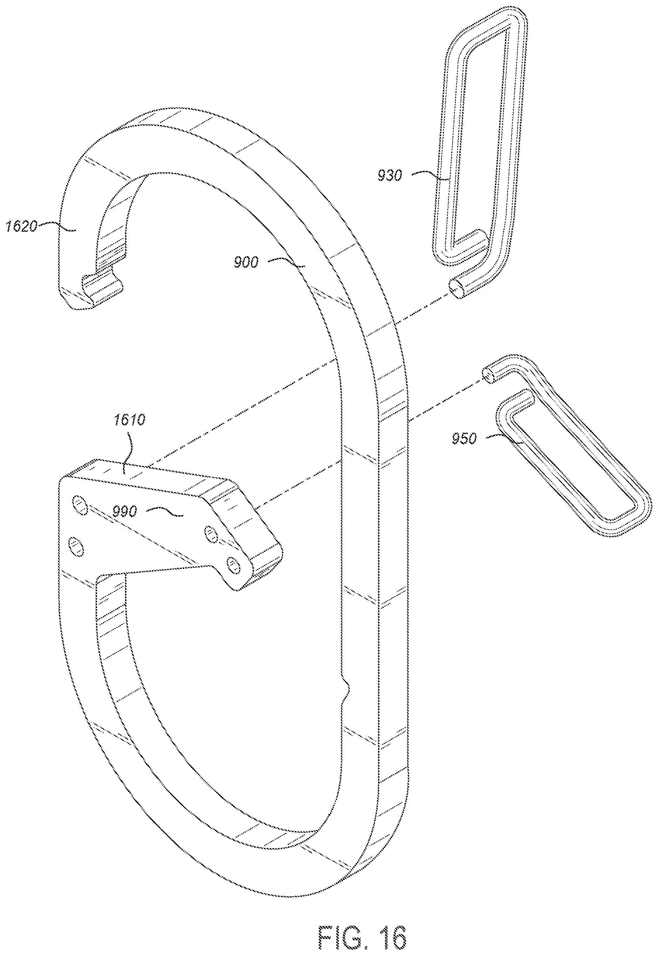

Figs. 10 and 11 show the front and rear side views of G-Biner 900. Fig. 12, shows a left side view of G-Biner 900. Fig. 13 shows a right side view of G-Biner 900. Figs. 14 and 15 show the bottom and top views of G-Biner 900. Fig. 16 shows G-Biner 900 with gates 930, 950 removed. In this view, G-Arm 990 is clearly visible and the mounting holes for gate 950 are shown. G-Arm 990 provides for an attachment area, without interfering with the operation of gate 930. If the cross portion 1610 of G-Arm 990 is inclined too far towards hook area 1620, then gate 930 may not function normally (or at least enough for the gate to sufficiently open).

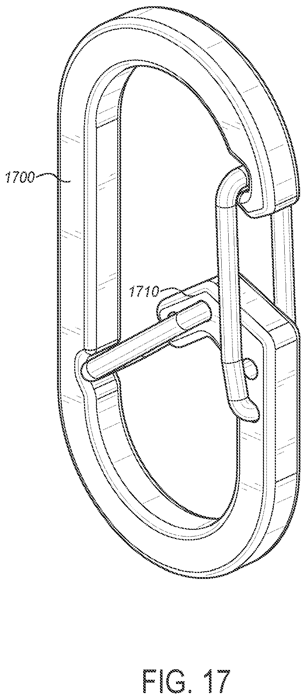

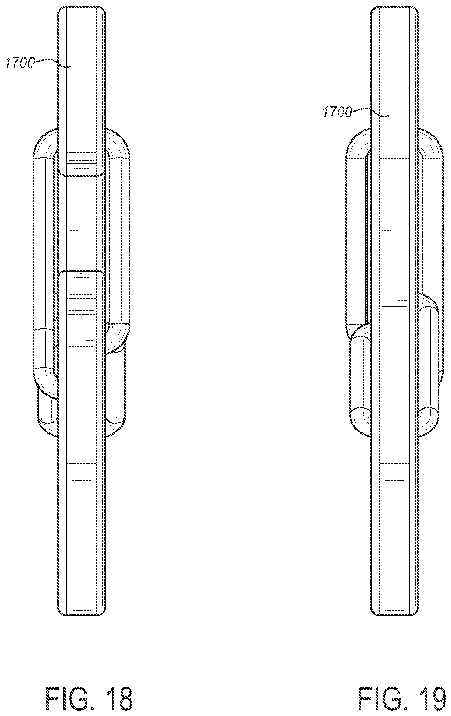

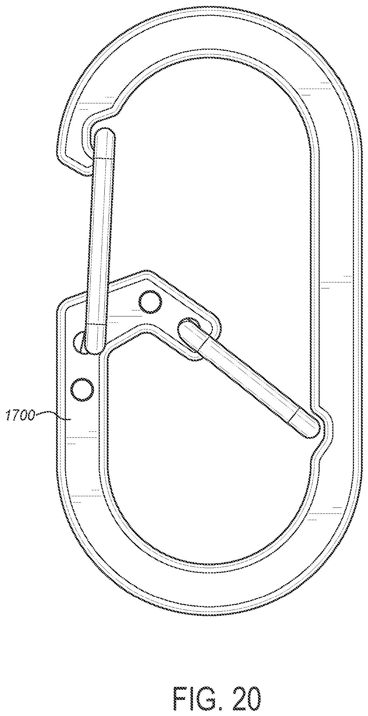

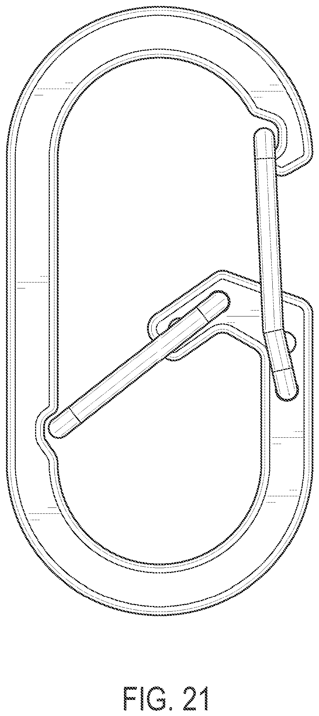

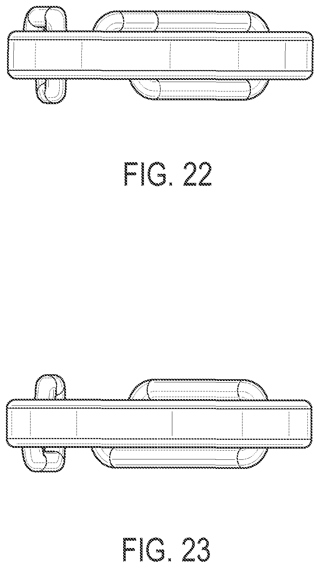

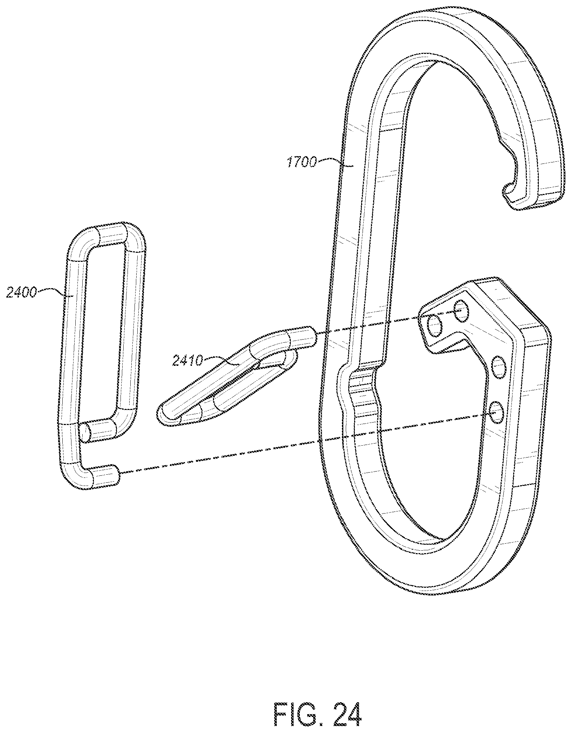

Figs. 17 - 24 show one embodiment of a G-Biner 1700. This embodiment show how dimensions may vary somewhat in appearance, with certain embodiments having shorter G-arms 1710. Figs. 18 and 19 show the front and rear side views of G-Biner 1700. Fig. 20, shows a left side view of G-Biner 1700. Fig. 21 shows a right side view of G-Biner 1700. Figs. 22 and 23 show the bottom and top views of G-Biner 1700. Fig. 24 shows G-Biner 1700 with gates 2400, 2410 removed. In this view, G-Arm 1710 is clearly visible and the mounting holes for gate 2410 are shown. G-Arm 1710 provides for an attachment area, without interfering with the operation of gate 2410.

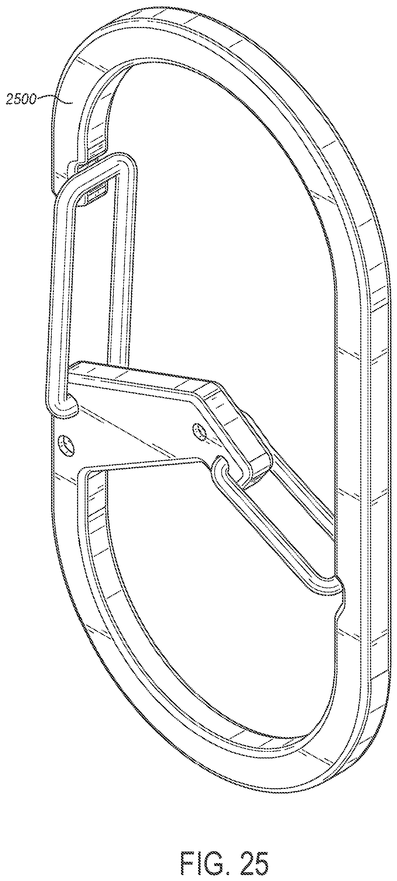

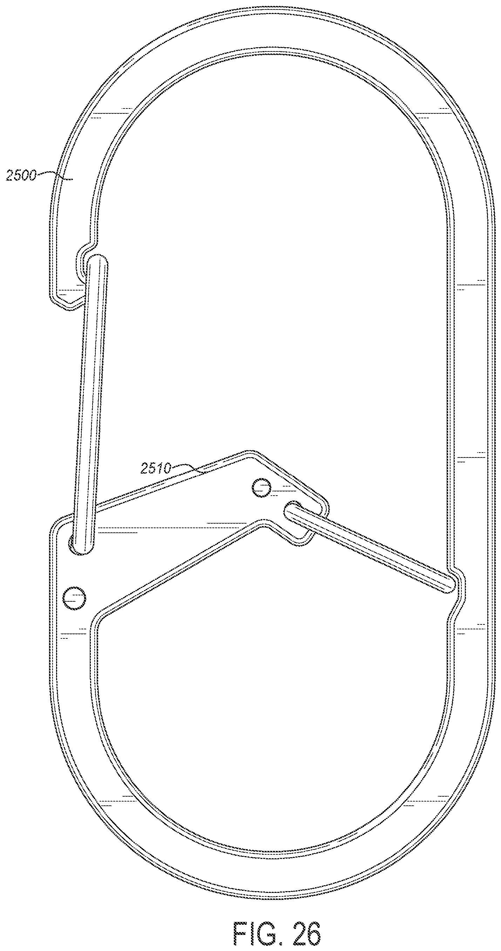

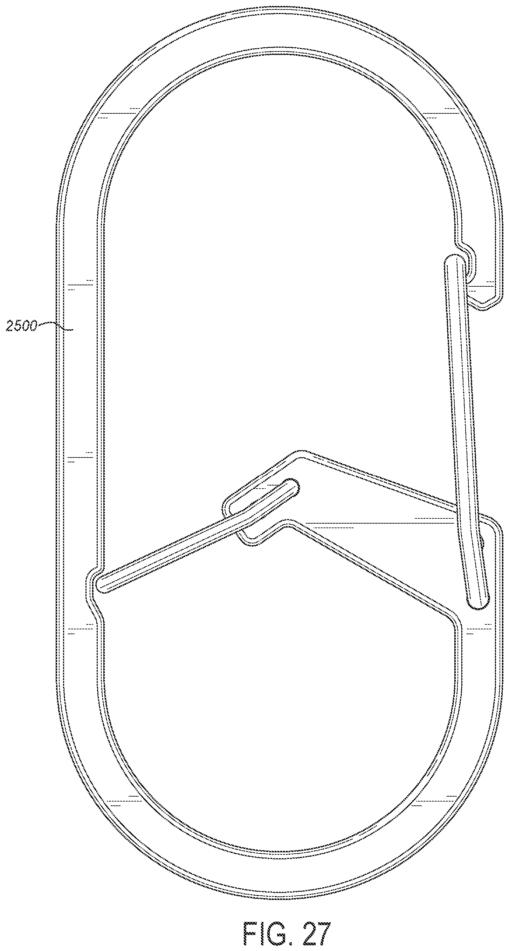

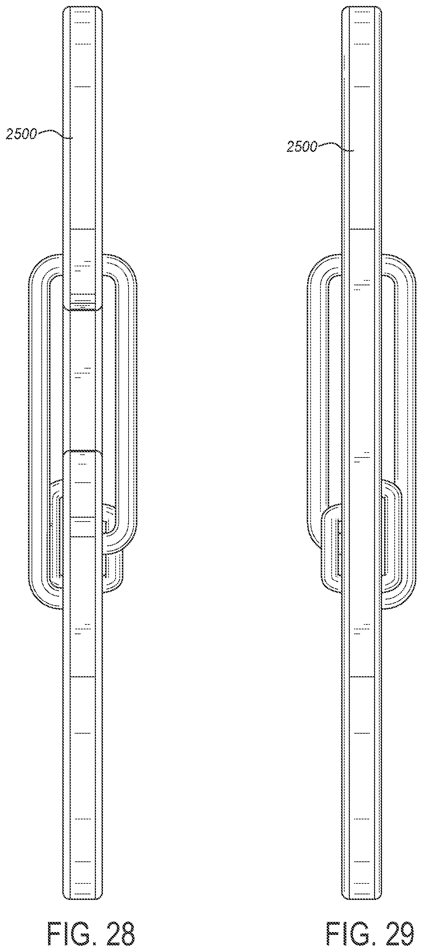

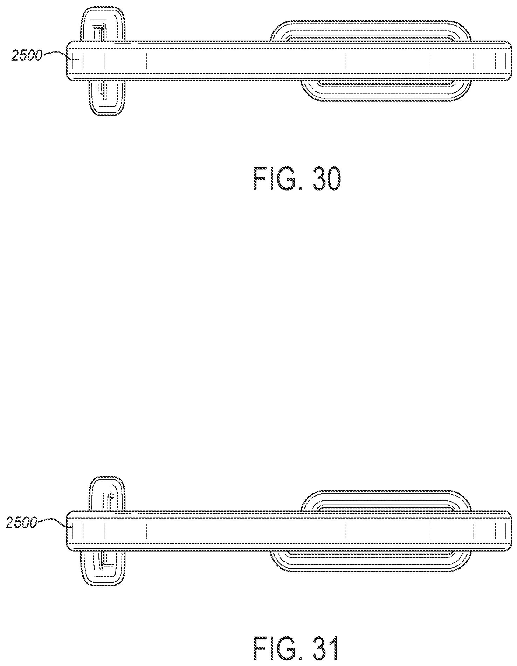

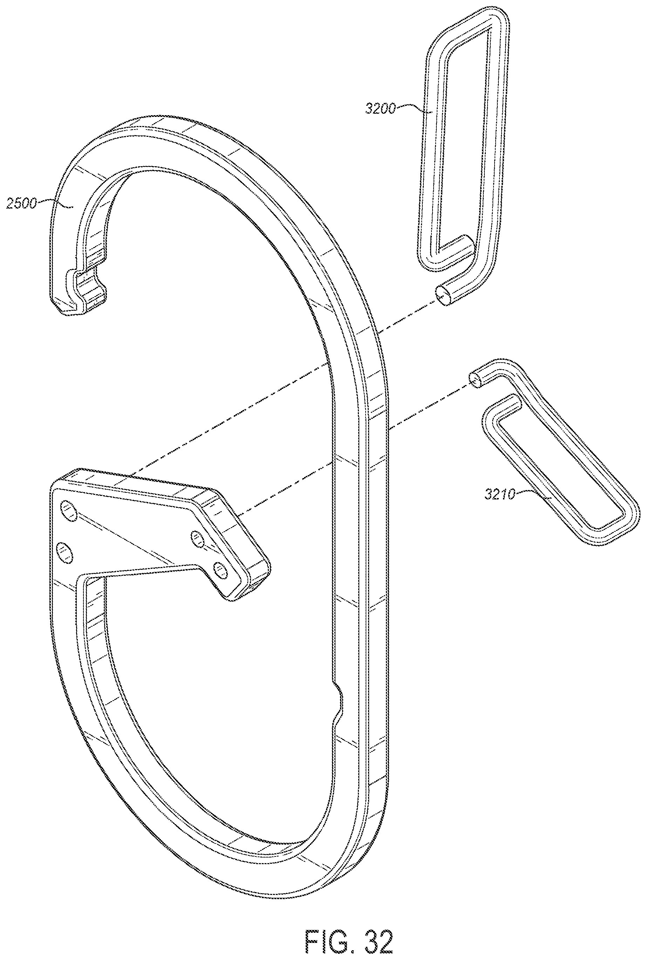

Figs. 25 - 32 show one embodiment of a G-Biner 2500. This embodiment show how dimensions may vary somewhat in appearance, with certain embodiments having shorter G-arms 2510. Figs. 26 and 27 show the front and rear side views of G-Biner 2500. Fig. 28, shows a left side view of G-Biner 2500. Fig. 29 shows a right side view of G-Biner 2500. Figs. 30 and 31 show the bottom and top views of G-Biner 2500. Fig. 32 shows G-Biner 1700 with gates 3200, 3210 removed. In this view, G-Arm 2510 is clearly visible and the mounting holes for gate 3210 are shown. G-Arm 2510 provides for an attachment area, without interfering with the operation of gate 3210.

While specific embodiments have been described in detail in the foregoing detailed description, it will be appreciated by those skilled in the art that various modifications and alternatives to those details could be developed in light of the overall teachings of the disclosure and the broad inventive concepts thereof. It is understood, therefore, that the scope of this disclosure is not limited to the particular examples and implementations disclosed herein but is intended to cover modifications within the scope thereof as defined by the appended claims.

## Claims

1. A carabiner comprising:
a carabiner body (100) having a first opening;
a first gate (130) coupled to the carabiner body, the first gate (130) configured to open and close the first opening;
a second gate (150) coupled to the carabiner body, the second gate, when closed, defining a first area and a second area and, when opened, providing a second opening to the second area;
an arm (121) formed by the carabiner body, that extends inwardly between the first area and the second area;
wherein the first gate (130), when opened, provides the first opening to the first area;
wherein the first gate (130) is configured to open inwardly via rotation in a first rotational direction and the second gate (150) is configured to open via rotation in the first rotational direction;
wherein the second gate (150) is pivotably coupled to an inwardly extending portion of the arm (121).

2. The carabiner of claim 1, wherein the second gate (150) opens inwardly on the carabiner body in the first rotational direction and closes against a stop (160) in a direction opposite the first rotational direction.

3. The carabiner of claim 2, wherein the carabiner body includes a cutout (170) that allows the second gate (150) to rotate in the first rotational direction.

4. The carabiner of claim 1, wherein the carabiner body comprises a thickness to allow a key comprising an aperture to slide along the carabiner body via the aperture.

5. The carabiner of claim 1, wherein the second gate (150) is pivotably coupled to the carabiner body below where the first gate (130) is coupled to the carabiner body.

6. The carabiner of claim 1, wherein the carabiner body, including the arm (121), forms a G shape.

7. A method of using any of the carabiners of claims 1-6 the method comprising:
sliding an object having an aperture onto the carabiner body while using the object to open the first opening via the first gate (130) to enter the first area;
sliding the object around the carabiner body;
using the object to open the second gate (150); and
sliding the object into the second area.

## Patentansprüche

1. Ein Karabiner, der folgende Merkmale aufweist:
einen Karabinerkörper (100) mit einer ersten Öffnung;
einen ersten Schnapper (130), der an den Karabinerkörper gekoppelt ist, wobei der erste Schnapper (130) dazu ausgebildet ist, die erste Öffnung zu öffnen und zu schließen;
einen zweiten Schnapper (150), der an den Karabinerkörper gekoppelt ist, wobei der zweite Schnapper, wenn derselbe geschlossen ist, einen ersten Bereich und einen zweiten Bereich definiert und, wenn derselbe geöffnet ist, eine zweite Öffnung zu dem zweiten Bereich bereitstellt;
einen Arm (121), der durch den Karabinerkörper gebildet ist, der sich zwischen dem ersten Bereich und dem zweiten Bereich nach innen erstreckt;
wobei der erste Schnapper (130), wenn derselbe geöffnet ist, die erste Öffnung zu dem ersten Bereich bereitstellt;
wobei der erste Schnapper (130) dazu ausgebildet ist, sich über eine Drehung in einer ersten Drehrichtung nach innen zu öffnen, und der zweite Schnapper (150) dazu ausgebildet ist, sich über eine Drehung in der ersten Drehrichtung zu öffnen;
wobei der zweite Schnapper (150) schwenkbar an einen sich nach innen erstreckenden Abschnitt des Arms (121) gekoppelt ist.

2. Der Karabiner gemäß Anspruch 1, wobei sich der zweite Schnapper (150) an dem Karabinerkörper in der ersten Drehrichtung nach innen öffnet und sich in einer der ersten Drehrichtung entgegengesetzten Richtung gegen einen Anschlag (160) schließt.

3. Der Karabiner gemäß Anspruch 2, wobei der Karabinerkörper eine Aussparung (170) umfasst, die es ermöglicht, dass sich der zweite Schnapper (150) in der ersten Drehrichtung dreht.

4. Der Karabiner gemäß Anspruch 1, wobei der Karabinerkörper eine Dicke aufweist, die es ermöglicht, dass ein Schlüssel, der eine Ausnehmung aufweist, über die Ausnehmung entlang des Karabinerkörpers gleitet.

5. Der Karabiner gemäß Anspruch 1, wobei der zweite Schnapper (150) unterhalb der Stelle, an welcher der erste Schnapper (130) an den Karabinerkörper gekoppelt ist, schwenkbar an den Karabinerkörper gekoppelt ist.

6. Der Karabiner gemäß Anspruch 1, wobei der Karabinerkörper, der den Arm (121) umfasst, eine G-Form bildet.

7. Ein Verfahren zur Verwendung eines der Karabiner gemäß den Ansprüchen 1-6, wobei das Verfahren folgende Schritte aufweist:
Gleitenlassen eines Objekts mit einer Ausnehmung auf den Karabinerkörper, während das Objekt dazu verwendet wird, die erste Öffnung über den ersten Schnapper (130) zu öffnen, um in den ersten Bereich zu gelangen;
Gleitenlassen des Objekts um den Karabinerkörper herum;
Verwenden des Objekts, um den zweiten Schnapper (150) zu öffnen; und
Gleitenlassen des Objekts in den zweiten Bereich.

## Revendications

1. Un mousqueton comprenant :
un corps de mousqueton (100) présentant une première ouverture ;
un premier loquet (130) couplé au corps de mousqueton, le premier loquet (130) étant configuré pour ouvrir et fermer la première ouverture ;
un deuxième loquet (150) couplé au corps de mousqueton, le deuxième loquet, lorsqu'il est fermé, définissant une première zone et une deuxième zone et, lorsqu'il est ouvert, fournissant un deuxième accès à la deuxième zone ;
un bras (121) formé par le corps de mousqueton, qui s'étend vers l'intérieur entre la première zone et la deuxième zone ;
dans lequel le premier loquet (130), lorsqu'il est ouvert, fournit la première ouverture vers la première zone ;
dans lequel le premier loquet (130) est configuré pour s'ouvrir vers l'intérieur par rotation dans une première direction de rotation et le deuxième loquet (150) est configuré pour s'ouvrir par l'intermédiaire d'une rotation dans la première direction de rotation ;
dans lequel le deuxième loquet (150) est couplé de manière pivotante à une partie du bras (121) qui s'étend vers l'intérieur.

2. Mousqueton selon la revendication 1, dans lequel le deuxième loquet (150) s'ouvre vers l'intérieur sur le corps de mousqueton dans la première direction de rotation et se ferme contre une butée (160) dans une direction opposée à la première direction de rotation.

3. Mousqueton selon la revendication 2, dans lequel le corps de mousqueton inclut une découpe (170) qui permet au deuxième loquet (150) de tourner dans la première direction de rotation.

4. Mousqueton selon la revendication 1, dans lequel le corps de mousqueton comprend une épaisseur pour permettre à une clé comprenant un orifice de coulisser le long du corps de mousqueton par l'intermédiaire de l'orifice.

5. Mousqueton selon la revendication 1, dans lequel le deuxième loquet (150) est couplé de manière pivotante au corps de mousqueton en dessous de l'endroit où le premier loquet (130) est couplé au corps de mousqueton.

6. Mousqueton selon la revendication 1, dans lequel le corps de mousqueton, incluant le bras (121), forme une forme en G.

7. Procédé pour utiliser l'un quelconque des mousquetons selon les revendications 1 à 6, le procédé comprenant le fait de :
coulisser un objet comprenant un orifice sur le corps de mousqueton tout en utilisant l'objet pour ouvrir la première ouverture par l'intermédiaire du premier loquet (130) pour accéder à la première zone ;
coulisser l'objet autour du corps de mousqueton ;
utiliser l'objet pour ouvrir le deuxième loquet (150) ; et
coulisser l'objet dans la deuxième zone.
